# EUROPEAN PATENT APPLICATION

(11) **EP 3 103 328 A1**
(43) Date of publication of application: **14.12.2016**
(21) Application number: 16173044.5
(22) Date of filing: 06.06.2016
(51) Int. Cl.: A01G 17/08

(54) **DEVICE FOR PROTECTING THE INTEGRITY AND THE OPERATION OF AN AUTOMATIC BINDER, AND METHOD FOR MANAGING THE BINDER USING SUCH DEVICE**

(30) Priority: 10.06.2015 IT UB20151081
(71) Applicant: Zanon S.R.L., 35011 Campodarsego PD (IT)
(72) Inventor: ZANON, Franco, 35011 Campodarsego PD (IT)
(74) Representative: Modiano, Micaela Nadia

(57) **Abstract**

A device (10) for protecting the integrity and the operation of an automatic binder, which comprises:
- an electronic component (13) installed at a spool of wire (12), provided with a microprocessor (14), with a writable memory (15) and with a data transmission antenna (16),
- an electronic control unit (17) connected to an electronic part (18) of the binder, which is adapted to provide the electronic control unit (17) with information related to the bindings, and communicating with the electronic component (13) by way of means for reading and writing information (21) on the memory (15). The memory (15) is adapted to contain information related to the number of remaining bindings that can be performed with the spool of wire (12) and/or to contain information related to the type of the spool of wire (12).

## Description

The present invention relates to a device for protecting the integrity and the operation of an automatic binder, and to a method for managing the binder using such device.

Nowadays in sectors like viticulture and floriculture, and also for fruit plants and vegetable cultivation, the use is widespread of automatic binders in order to secure, by way of adapted ties, the plants or the branches to supporting canes in order to train their growth.

Motorized automatic binders are widespread, which are continuously fed with a spool of flexible wire which is cut and tied automatically and in a controlled manner so as to close it around the branch and the supporting cane, by twisting its two free ends together.

The market offers spools of wire of different types, but which are compatible with a same binding machine; however, the binder can give an optimal performance with one specific wire.

Different wires can induce stresses in the mechanical and electronic components, reducing their lifetime, and they offer a lower binding performance than that envisaged by the design of the binder.

For example operations like cutting the wire, at each tie length, or twisting the free ends, may not be carried out correctly owing to a different thickness or hardness from those intended. Wires that are different from the intended wire can in fact vary in composition and weight.

Another not inconsiderable drawback lies in the fact during use of the binder it is not possible to say how many bindings can still be executed, except by checking for the presence of wire on the spool in use.

The operator does not immediately notice that the wire has run out because even without it the binder continues to operate and to reproduce the movement of binding if it was actuated.

The aim of the present invention is to provide a device and a method for protecting the integrity and the operation of an automatic binder, and a method for managing such binder, which make it possible to recognize wires that are compatible with the binder and to prevent the operation of the latter owing to incompatibility of the wire or to running out of the same.

Within this aim, an object of the invention is to preserve the components of the binder.

Another object of the invention is to prevent the wire of the spool mounted on the binder from impeding the optimal operation of the binder.

This aim and these and other objects which will become better apparent hereinafter are achieved by a device for protecting the integrity and the operation of an automatic binder, characterized in that it comprises:
- an electronic component installed at a spool of wire, provided with a microprocessor, with a writable memory and with a data transmission antenna,
- an electronic control unit connected to an electronic part of the binder, which is adapted to provide said electronic control unit with information related to the bindings, and communicating with said electronic component by way of means for reading and writing information on said memory,
said memory being adapted to contain information related to the number of remaining bindings that can be performed with said spool of wire and/or to contain information related to the type of said spool of wire.

The invention also relates to a method for managing the binder using the above device, which consists in:
- checking the compatibility of said spool of wire with said automatic binder and/or reading from said memory the number of remaining bindings on said spool of wire,
- updating said memory with the number of remaining bindings after the execution of a binding or of a series of bindings,
- disabling the operation of said automatic binder when the number of remaining bindings is nil and/or when the type of said spool of wire is not recognized as suitable for the automatic binder.

Further characteristics and advantages of the invention will become better apparent from the description of a preferred, but not exclusive, embodiment of the device according to the invention, which is illustrated by way of non-limiting example in the accompanying drawings wherein:
Figure 1 shows the principal components of the device according to the invention;
Figure 2 is a schematic diagram of the electronic component of the device according to the invention;
Figure 3 is a schematic diagram of the device according to the invention.

With reference to the figures, the device according to the invention is generally designated with the reference numeral 10.

The device 10 comprises a support 11 that substantially consists of a box-like body, of which only a half-shell is shown, in which the other components and a spool of wire 12 to be supplied to an automatic binder are arranged.

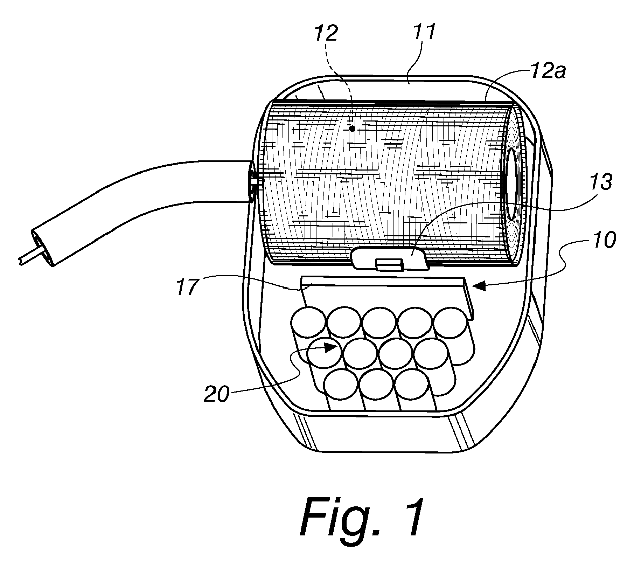

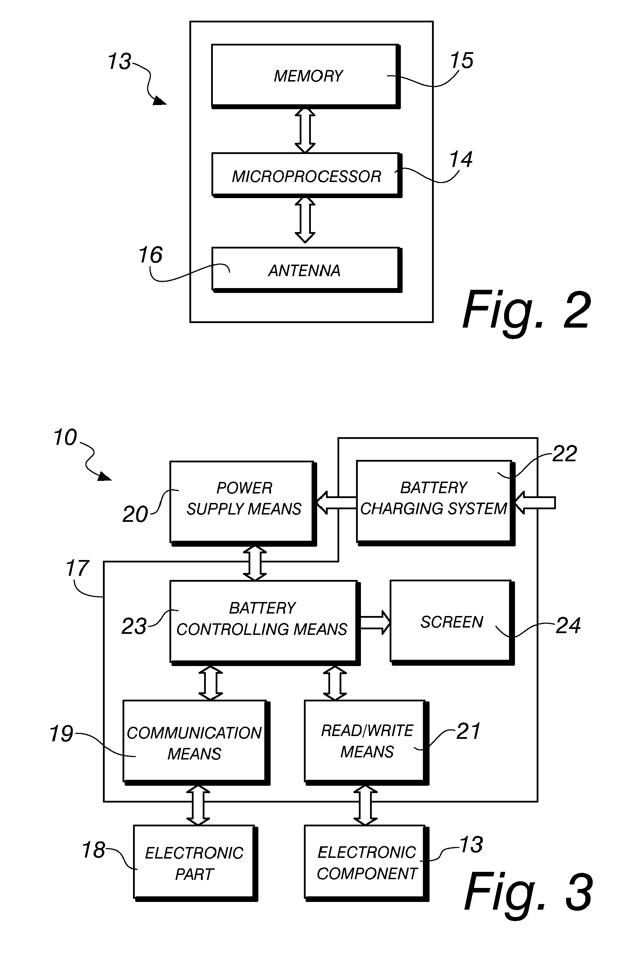

The device 10 comprises an electronic component 13 installed at the spool of wire 12, which is provided with a microprocessor 14, a writable memory 15, a radiofrequency transmitter/receiver 25 and a data transmission antenna 16. These elements are indicated in Figure 2. It consists substantially of an RFID tag, which is to be applied to the spool of wire 12, as illustrated in Figure 1.

The spool of wire 12 is conveniently contained in an enclosure 12a, preferably made of plastic material (and sufficiently rigid to prevent it from collapsing on itself as the wire runs out) and the RFID tag is applied thereupon.

Means of locking the spool in its seat can be provided, in order to prevent it from rotating as the wire is fed out thus also causing the movement of the tag applied thereupon, which in such case would not be readable.

The memory 15 of the electronic component 13 is adapted to contain information related to the number of remaining bindings that can be performed with the spool of wire 12, which correspond to the number of usable ties, and it is also adapted to contain information related to the type of spool of wire 12 to which it is applied. To meet this need, in the memory 15 there is a unique identifier, which preferably consists of an alphanumeric string.

The device 10 also comprises an electronic control unit 17 which is connected with an electronic part of the binder, shown schematically with 18 in Figure 3, which is adapted to provide the electronic control unit 17 with information related to the bindings (in particular the number of binding strokes), by way of communication means 19 (preferably a connecting cable). The electronic control unit 17 is connected to the electronic component 13 by way of means for reading and writing information 21 on the memory 15 and it is also connected to power supply means 20, preferably a rechargeable battery. The electronic control unit 17 is installed at the battery.

The electronic component 13 does not have a power supply system because it is powered by the electronic control unit 17 by way of the antenna.

As illustrated in Figure 3, the electronic control unit 17 comprises, in addition to the means of communication 19 with the binder:
- means of reading and of writing information 21, conveniently provided with an antenna for communicating with the electronic component 13,
- a system for charging the battery 22,
- means of controlling the battery 23 (known as BMS, Battery Management System),
- a screen 24.

In particular, the means for reading and writing information 21 are constituted by an RFID reader/writer, which in turn comprises the following components:
- an antenna adapted to receive and transmit the information,
- a radiofrequency transmitter/receiver,
- a microcontroller that controls what to write and what to read,
- a system for powering the microcontroller and the transmitter/receiver.

A method for managing the binder using the device 10 consists in:
- checking the compatibility of the spool of wire 12 with the automatic binder and/or reading from the memory 15 the number of remaining bindings on the spool of wire 12,
- updating the memory 15 with the number of remaining bindings after the execution of a binding or of a series of bindings,
- disabling the operation of the automatic binder when the number of remaining bindings is nil and/or when the type of the spool of wire 12 is not recognized as suitable for the automatic binder.

Substantially, when a new spool of wire 12 is loaded into the support 11 of the automatic binder, the electronic component 13 is already applied to it and it holds in memory the maximum number of bindings available and the identifier for the spool of wire 12.

Initially the electronic control unit 17, by way of the means for reading and writing information 21, reads the type of the spool of wire 12 from the memory 15 of the electronic component 13, in order to verify its compatibility with the automatic binder.

If the spool of wire 12 is not recognized as suitable for the automatic binder, then the power supply to the binder is cut, so that it cannot operate.

If on the other hand the spool of wire 12 is recognized as suitable, then at each binding stroke, or at each preset series of binding strokes, the means for reading and writing information 21 update the memory 15 of the electronic component 13, decrementing the number of remaining bindings.

In particular, in this step the number of binding strokes is communicated by the electronic part 18 of the binder to the electronic control unit 17 by way of the connecting cable (communication means 19) which updates the memory 15 as a consequence.

Inconsistent bindings are identified on the basis of the current absorbed in each instance by the binder. Empty bindings in fact draw a different level of current from effective bindings. It is possible to set a margin for error.

The number of remaining bindings is therefore read periodically by the means for reading and writing information 21 and when the remaining bindings have run out, the power supply to the binder is cut, so that it cannot operate.

Operation of the device according to the invention is evident from what is described and illustrated above and, in particular, it is evident that by way of the device and the method devised it is possible to control the wire of an automatic binder in order to preserve the components of the binder if the wire is not adapted to the binder or if the wire runs out.

By allowing operation of the binder exclusively with spools of wire that are adapted for use with the binder, the device ensures optimal performance.

In practice it has been found that the invention fully achieves the intended aim and objects, by providing a device and a method which make it possible to safeguard the integrity and the operation of an automatic binder, while preventing its operation if the wire runs out or is not compatible with the binder and therefore ensuring an optimal operation of the binder.

The invention, thus conceived, is susceptible of numerous modifications and variations, all of which are within the scope of the appended claims. Moreover, all the details may be substituted by other, technically equivalent elements.

In practice the materials employed, provided they are compatible with the specific use, and the contingent dimensions and shapes, may be any according to requirements and to the state of the art.

The disclosures in Italian Patent Application No. 102015000022122 (UB2015A001081) from which this application claims priority are incorporated herein by reference.

Where technical features mentioned in any claim are followed by reference signs, those reference signs have been included for the sole purpose of increasing the intelligibility of the claims and accordingly, such reference signs do not have any limiting effect on the interpretation of each element identified by way of example by such reference signs.

## Claims

1. A device (10) for protecting the integrity and the operation of an automatic binder, **characterized in that** it comprises:
- an electronic component (13) installed at a spool of wire (12), provided with a microprocessor (14), with a writable memory (15) and with a data transmission antenna (16),
- an electronic control unit (17) connected to an electronic part (18) of the binder, which is adapted to provide said electronic control unit (17) with information related to the bindings, and communicating with said electronic component (13) by way of means for reading and writing information (21) on said memory (15),
said memory (15) being adapted to contain information related to the number of remaining bindings that can be performed with said spool of wire (12) and/or to contain information related to the type of said spool of wire (12).

2. The device according to claim 1, **characterized in that** said electronic component (13) consists of an RFID tag to be applied to said spool of wire (12).

3. The device according to claim 1, **characterized in that** said means for reading and writing information (21) are provided with an antenna for communicating with said electronic component (13).

4. The device according to claim 2, **characterized in that** said RFID tag is applied on an enclosure (12a) which encloses said spool of wire.

5. A method for managing the binder using the device according to one or more of the preceding claims, which consists in:
- checking the compatibility of said spool of wire (12) with said automatic binder and/or reading from said memory (15) the number of remaining bindings on said spool of wire (12),
- updating said memory (15) with the number of remaining bindings after the execution of a binding or of a series of bindings,
- disabling the operation of said automatic binder when the number of remaining bindings is nil and/or when the type of said spool of wire (12) is not recognized as suitable for the automatic binder.
